# EUROPÄISCHE PATENTSCHRIFT

(11) **EP 1 892 311 B1**
(45) Veröffentlichungstag und Bekanntmachung des Hinweises auf die Patenterteilung: **31.03.2010**
(21) Anmeldenummer: 06017533.8
(22) Anmeldetag: 23.08.2006
(51) Int. Cl.: C23C 4/08, C23C 28/02, C23C 30/00

(54) **Turbinenschaufel mit einem Beschichtungssystem**
Turbine Blade with a coating system
Aube de turbine avec une système de revêtement

(43) Veröffentlichungstag der Anmeldung: 27.02.2008
(73) Patentinhaber: SIEMENS AKTIENGESELLSCHAFT, 80333 München (DE)
(72) Erfinder: Barnikel, Jochen, Dr., 45470 Mülheim an der Ruhr (DE); Schmitz, Friedhelm, 46537 Dinslaken (DE)

(56) Entgegenhaltungen:
- EP-A- 1 528 124
- US-A1- 2005 118 334
- US-B1- 6 207 297
- US-B1- 6 306 524
- US-B1- 6 455 167

## Beschreibung

Die Erfindung betrifft eine Turbinenschaufel mit einem Beschichtungssystem, das mindestens eine direkt auf dem Bauteil aufgebrachte Haftschicht und eine auf der Haftschicht ausgebildete Wärmedämmschicht aufweist.

Bauteile, die hohen Temperaturen und korrosiven Bedingungen ausgesetzt werden, müssen mit speziellen Beschichtungen versehen werden, um sie vor Beschädigung zu schützen und damit eine längere Lebensdauer zu gewährleisten. Heute werden insbesondere für Turbinenschaufel von Dampf- oder Gasturbinen Beschichtungssysteme verwendet, die aus mehreren übereinander angebrachten Lagen bestehen. Häufig handelt es sich dabei zumindest um eine Haftschicht, die unmittelbar auf die Turbinenschaufel aufgebracht ist, und eine auf dieser ausgebildete Wärmedämmschicht.

Die Haftschicht hat in vielen Fällen die allgemeine Zusammensetzung MCrAlY, wobei M für mindestens eines der Elemente aus der Gruppe umfassend Eisen, Kobalt und Nickel steht und Y Yttrium oder ein weiteres äquivalentes Element aus der Gruppe umfassend Scandium und die Elemente der seltenen Erden ist. Die Aufgaben der Haftschicht sind einerseits Schutz vor Korrosion und/oder Oxidation und andererseits eine starke Haftung der Wärmedämmschicht auf der Turbinenschaufel zu gewährleisten.

Die Wärmedämmschicht wiederum besteht häufig aus keramischen Materialien, welche Zirkonoxid enthalten können. Erst ihre Fähigkeit zur starken Wärmeisolation erlaubt den Einsatz der Bauteile in Temperaturbereichen > 1000°C.

Entsprechende Schutzschichten und Schichtsysteme sind beispielsweise in der EP 1 541 713 A1 und in der US 6,306,524 B1 beschrieben.

Bei den bekannten Haftschichten kann es in einem Temperaturbereich > 550°C zu Interdiffusionserscheinungen zwischen der Metalllegierung des Grundwerkstoffs der Turbinenschaufel und den Bestandteilen der Haftschicht kommen, wodurch eine unerwünschte Phasenbildung auftreten kann. In deren Folge kommt es zu einer Beeinträchtigung der Grundwerkstoffeigenschaften, die die Lebensdauer der Turbinenschaufel reduzieren. Trotzdem ist eine minimale, die Eigenschaften des Grundwerkstoffs nicht beeinträchtigende, Interdiffusion der Legierungselemente zwischen der Haftschicht und dem Grundwerkstoff erwünscht, da hierdurch die Haftung zwischen dem Grundwerkstoff und der Haftschicht erheblich verbessert wird. Außerdem kann auf diese Weise das Oxidations- und Korrosionsverhalten des Grundwerkstoffs im oberflächennahen Bereich verbessert werden.

Aufgabe der vorliegenden Erfindung ist es, eine Turbinenschaufel mit einem Beschichtungssystem bereit zu stellen, das die Interdiffusion der Legierungsbestandteile zwischen dem Grundwerkstoff der Turbinenschaufel und den Bestandteilen der Haftschicht derart minimiert, dass gerade der für eine optimale Haftung der Haftschicht auf der Turbinenschaufel nötige Grad von Vermischung erzielt wird und gleichzeitig die Grundwerkstoffeigenschaften nicht beeinträchtigt werden.

Die Aufgabe wird erfindungsgemäß dadurch gelöst, dass die Haftschicht 22 bis 36 Gew.-% Cr, 15 bis 30 Gew.-% Ni, maximal 55 ppm Al, - optional 1-3 Gew % Si und Fe als Basis enthält. Es wird also eine Haftschicht verwendet, die vor allem Eisen, Chrom, Nickel enthält und in der nur eine geringe Menge Aluminium enthalten ist.

Vorteil der erfindungsgemäßen Turbinenschaufel ist es, dass die Haftschicht als Sperrschicht ausgebildet ist, welche die Interdiffusion zwischen den Bestandteilen des Grundkörpers und denen der Haftschicht minimiert. Dabei sorgt sie dafür, dass keine unerwünschten Phasen und Mischgefüge gebildet werden, lässt aber andererseits ein gewisses Maß an Interdiffusion zu, das eine optimale Haftung der Haftschicht auf dem Grundwerkstoff ermöglicht. Außerdem bleibt der Grundwerkstoff der Turbinenschaufels in seinen Eigenschaften unbeeinträchtigt.

Gemäß einer bevorzugten Ausführungsform der Erfindung kann die Haftschicht zusätzlich 1 bis 3 Gew.-% Si enthalten. Alle diese Zusätze führen zu einer Verbesserung der Oxidationsbeständigkeit der Haftschicht.

Gemäß einer weiteren Ausführungsform kann die Haftschicht 25 Gew.-% Cr und 20 Gew.-% Ni enthalten. Es ist ebenso möglich, eine Haftschicht mit 30 Gew.-% Cr und 30 Gew.-% Ni vorzusehen.

Vorteilhafterweise ist die Haftschicht als Sperrschicht ausgebildet, welche die Interdiffusion zwischen der Turbinenschaufel und der Haftschicht minimiert. Auf diese Weise wird sichergestellt, dass keine unerwünschten Phasen und Mischgefüge im Grundwerkstoff entstehen.

Gemäß einer weiteren Ausführungsform der Erfindung ist vorgesehen, dass die Haftschicht mehrlagig ausgebildet ist. In diesem Fall wirkt die erste direkt auf der Turbinenschaufel aufgebrachte Lage als Sperrschicht für die weiteren, auf der ersten Lage ausgebildeten Lagen. Dies geschieht dadurch, dass die erste Lage die Interdiffusion zwischen den Bestandteilen der Turbinenschaufel und denen der weiteren Lage minimiert.

Es hat sich gezeigt, dass ein erfindungsgemäßes Bauteil mit einer hohen Temperatur-, Korrosions- und Oxidationsbeständigkeit erhalten werden kann, wenn die Wärmedämmschicht aus einer Keramik, beispielsweise auf Zirkonoxidbasis besteht.

Die Erfindung wird im Folgenden anhand zweier Ausführungsbeispiele unter Bezug auf die beiliegenden Zeichnungen näher erläutert. Es zeigen:
- Figur 1: einen schematischen Querschnitt durch ein erstes erfindungsgemäßes Bauteil,
- Figur 2: einen schematischen Querschnitt durch ein zweites erfindungsgemäßes Bauteils,
- Figur 3: eine perspektivische Ansicht einer Laufschaufel oder einer Leitschaufel einer Strömungsmaschine,
- Figur 4: eine Dampfturbine in einem Längsteilschnitt.

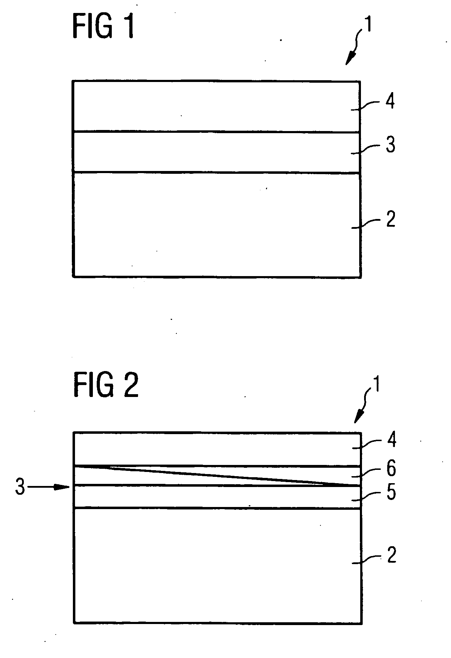

Figur 1 zeigt einen schematischen Querschnitt durch eine erste erfindungsgemäße Turbinenschaufel. Die Turbinenschaufel 1 besteht aus einem Grundkörper 2, der hier aus einer Nickelbasislegierung besteht. Auf diesem Grundkörper 2 ist flächig eine Haftschicht 3 aufgebracht, die aus 22 bis 36 Gew.-% Cr, 15 bis 30 Gew.-% Ni, maximal 50 ppm Al und Fe Basis besteht. Die Haftschicht 3 kann zusätzlich auch 1 bis 3 Gew % Si. Auf der Haftschicht 3 ist wiederum eine Wärmedämmschicht 4 flächig ausgebildet, die in diesem Fall eine Keramik auf Zirkonoxidbasis enthält. Die Haftschicht 3 ist als Sperrschicht ausgebildet, welche die Interdiffusion zwischen den Bestandteilen des Grundkörpers und denen der Haftschicht minimiert. Dabei sorgt sie dafür, dass keine unerwünschten Phasen und Mischgefüge im Grundwerkstoff gebildet werden, lässt aber andererseits ein gewisses Maß an Interdiffusion zu, das eine optimale Haftung der Haftschicht auf dem Grundwerkstoff ermöglicht.

Um die erfindungsgemäße Turbinenschaufel 1 herzustellen, wird in einem ersten Schritt die Haftschicht 3 flächig mit Hilfe von im Stand der Technik bekannten Beschichtungsverfahren auf den Grundkörper 2 aufgebracht, wobei beispielsweise APS, HVOF und LPPS geeignet sind. Anschließend wird in einem zweiten Schritt die Wärmedämmschicht als äußere Beschichtung flächig auf der Haftschicht aufgebracht. Auch hierfür sind die bereits genannten im Stand der Technik bekannten Verfahren geeignet.

Figur 2 zeigt eine zweite Ausführungsform eines erfindungsgemäßen Bauteils 1 in schematischem Schnitt. Es handelt sich hierbei um ein Turbinenblatt 120, 130 einer Gasturbine 100, das einen Grundkörper 2 aufweist, der aus einer Nickelsuperlegierung besteht. Auf der Oberfläche des Grundkörpers 2 ist eine mehrlagige Haftschicht 3 ausgebildet, wobei eine erste Lage 5 unmittelbar auf dem Grundkörper 2 angeordnet ist. Eine weitere Lage 6 ist auf der ersten Lage 5 aufgebracht. Die erste Lage 5 wirkt als Sperrschicht für die weitere Lage 6, indem sie die Interdiffusion zwischen den Bestandteilen des Grundkörpers 2 und denen der weiteren Lage 6 minimiert. Die erste Lage 5 hat eine Zusammensetzung von 22 bis 36 Gew.-% Cr, 15 bis 30 Gew.-% Ni, maximal 50 ppm A1, 1 bis 3 Gew.-% Si und Fe als Basis. Die weitere Lage 6 ist mit einer Wärmedämmschicht 4 flächig beschichtet, welche aus einer Keramik besteht und Zirkonoxid enthält.

Um die erfindungsgemäße Turbinenschaufel 1 herzustellen, wird zunächst auf dem Grundkörper 2 der Turbinenschaufel 1 flächig die erste Lage 5 der Haftschicht 3 aufgebracht. Dafür können die im Stand der Technik bekannten und bereits oben genannten Beschichtungsverfahren eingesetzt werden. In analoger Weise wird dann zuerst auf der ersten Lage 5 die weitere Lage 6 sowie auf dieser wiederum die Wärmedämmschicht 4 mit Hilfe von Beschichtungsverfahren aufgebracht.

In beiden Fällen weist die Haftschicht 3 vorzugsweise eine Dichte ≥ 95% der theoretischen Dichte auf.

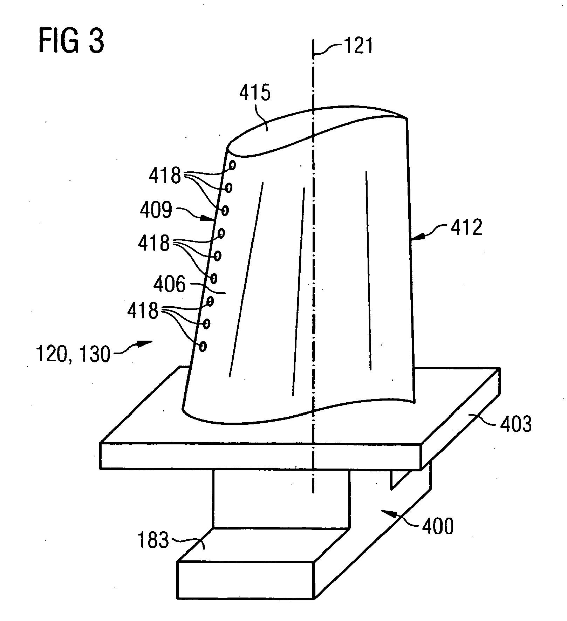

Die Figur 3 zeigt in perspektivischer Ansicht eine solche Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen.

Auf der Korrosionsschutzschicht (als Zwischenschicht oder als äußerste Schicht) bildet sich eine schützende Oxidschicht (TGO = thermal grown oxide layer), insbesondere eine Aluminiumoxidschicht.

Auf der Korrosionsschutzschicht kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte Korrosionsschutzschicht.
Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die Korrosionsschutzschicht.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

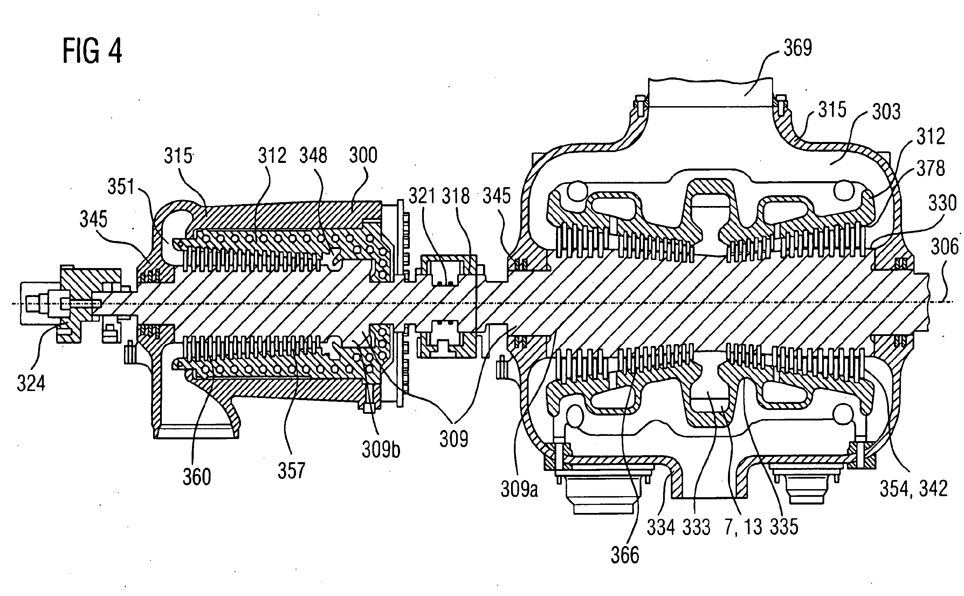

In Figur 4 ist eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließendes Außengehäuse 315 auf. Die Hochdruck-Teilturbine 300 ist beispielsweise in Topfbauart ausgeführt. Die Mitteldruck-Teilturbine 303 ist beispielsweise zweiflutig ausgeführt. Es ist ebenfalls möglich, dass die Mitteldruck-Teilturbine 303 einflutig ausgeführt ist.

Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 357 auf. Diese Hochdruck-Laufbeschaufelung 357 stellt mit den zugehörigen, nicht näher dargestellten Laufschaufeln einen ersten Beschaufelungsbereich 360 dar.

Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

Die Turbinenwelle 309 ist beispielsweise aus zwei Teilturbinenwellen 309a und 309b zusammengesetzt, die im Bereich des Lagers 318 fest miteinander verbunden sind. Jede Teilturbinenwelle 309a, 309b weist eine als zentrale Bohrung 372a entlang der Rotationsachse 306 ausgebildete Kühlleitung 372 auf. Die Kühlleitung 372 ist mit dem Dampfaustrittsbereich 351 über eine eine radiale Bohrung 375a aufweisende Zuströmleitung 375 verbunden. In der Mitteldruck-Teilturbine 303 ist die Kühlmittelleitung 372 mit einem nicht näher dargestellten Hohlraum unterhalb der Wellenabschirmung verbunden. Die Zustromleitungen 375 sind als radiale Bohrung 375a ausgeführt, wodurch "kalter" Dampf aus der Hochdruck-Teilturbine 300 in die zentrale Bohrung 372a einströmen kann. Über die insbesondere auch als radial gerichtete Bohrung 375a ausgebildete Abströmleitung 372 gelangt der Dampf durch den Lagerbereich 321 hindurch in die Mitteldruck-Teilturbine 303 und dort an die Manteloberfläche 330 der Turbinenwelle 309 im Dampfeinströmbereich 333. Der durch die Kühlleitung strömende Dampf hat eine deutlich niedrigere Temperatur als der in den Dampfeinströmbereich 333 einströmende zwischenüberhitzte Dampf, so dass eine wirksame Kühlung der ersten Laufschaufelreihen 342 der Mitteldruck-Teilturbine 303 sowie der Manteloberfläche 330 im Bereich dieser Laufschaufelreihen 342 gewährleistet ist.

## Patentansprüche

1. Turbinenschaufel (120, 130) einer Turbine mit einem Beschichtungssystem,
das mindestens eine direkt auf dem Bauteil (1) aufgebrachte Haftschicht (3) und insbesondere eine auf der Haftschicht (3) ausgebildete Wärmedämmschicht (4) aufweist,
**dadurch gekennzeichnet, dass**
die Haftschicht (3) aus
22 bis 36 Gew.-% Cr,
15 bis 30 Gew.-% Ni,
Fe als Basis,
maximal 55 ppm Al,
optional
1 bis 3Gew.-% Si besteht.

2. Turbinenschaufel (120, 130) einer Turbine nach Anspruch 1, dessen Haftschicht (3) aus Chrom (Cr), Nickel (Ni), Eisen (Fe) und optional Aluminium (A1) besteht.

3. Turbinenschaufel (120, 130) einer Turbine nach Anspruch 1, dessen Haftschicht (3) aus Chrom (Cr), Nickel (Ni), Silizium (Si), Eisen (Fe) und optional Aluminium (A1) besteht.

4. Turbinenschaufel (120, 130) einer Turbine nach Anspruch 1, dessen Haftschicht (3) aus Chrom (Cr), Nickel (Ni), Silizium (Si), Rest Eisen und optional: Aluminium (Al) besteht.

5. Turbinenschaufel (120, 130) einer Turbine nach Anspruch 1, dessen Haftschicht (3) aus Chrom (Cr), Nickel (Ni), Rest Eisen (Fe), optional: Aluminium (Al) besteht.

6. Turbinenschaufel (120, 130) einer Turbine nach einem der Ansprüche 1 bis 5,
**dadurch gekennzeichnet, dass**
die Haftschicht (3) 25 Gew.-% Cr und 20 Gew.-% Ni enthält.

7. Turbinenschaufel (120, 130) einer Turbine nach einem der Ansprüche 1 bis 5,
**dadurch gekennzeichnet, dass**
die Haftschicht (3) 30 Gew.-% Cr und 30 Gew.-% Ni enthält.

8. Turbinenschaufel (120, 130) einer Turbine nach einem der Ansprüche 1 bis 7,
**dadurch gekennzeichnet, dass**
die Haftschicht (3) als Sperrschicht ausgebildet ist,
welche die Interdiffusion zwischen dem Bauteil (1) und der Haftschicht (3) minimiert.

9. Turbinenschaufel (120, 130) einer Turbine nach einem der Ansprüche 1 bis 7,
**dadurch gekennzeichnet, dass**
die Haftschicht (3) mehrlagig ausgebildet ist.

10. Turbinenschaufel (120, 130) einer Turbine nach Anspruch 9,
**dadurch gekennzeichnet, dass**
die erste auf dem Bauteil aufgebrachte Lage (5) der Haftschicht (3) als Sperrschicht für zumindest eine weitere auf der ersten Lage (5) ausgebildete Lage (6) wirkt,
indem sie die Interdiffusion zwischen dem Bauteil (1) und der weiteren Lage (6) minimiert.

11. Turbinenschaufel (120, 130) einer Turbine nach einem der Ansprüche 1 bis 10,
**dadurch gekennzeichnet, dass**
die Wärmedämmschicht (4) eine Keramik enthält.

12. Turbinenschaufel (120, 130) einer Turbine nach einem der Ansprüche 1 bis 10,
**dadurch gekennzeichnet, dass**
die Wärmedämmschicht (4) aus einer Keramik besteht.

13. Turbinenschaufel (120, 130) einer Turbine nach Anspruch 11 oder 12,
**dadurch gekennzeichnet, dass**
das Bauteil aus einem Substrat (2), einer Haftschicht (3) und einer Wärmedämmschicht besteht.

14. Turbinenschaufel (120, 130) einer Turbine nach Anspruch 11, 12 oder 13,
**dadurch gekennzeichnet, dass**
die Keramik auf Zirkonoxidbasis ist.

## Claims

1. Turbine blade (120, 130) of a turbine having a coating system, which comprises at least one bonding coat (3) applied directly onto the component (1) and at least one thermal barrier coat (4) formed on the bonding coat (3), **characterized in that** the bonding coat (3) consists of
from 22 to 36 wt.% Cr,
from 15 to 30 wt.% Ni,
Fe as a basis,
at most 55 ppm Al,
optionally
from 1 to 3 wt.% Si.

2. Turbine blade (120, 130) of a turbine according to Claim 1, the bonding coat (3) of which consists of chromium (Cr), nickel (Ni), iron (Fe) and optionally aluminium (Al).

3. Turbine blade (120, 130) of a turbine according to Claim 1, the bonding coat (3) of which consists of chromium (Cr), nickel (Ni), silicon (Si), iron (Fe) and optionally aluminium (A1).

4. Turbine blade (120, 130) of a turbine according to Claim 1, the bonding coat (3) of which consists of chromium (Cr), nickel (Ni), silicon (Si), the remainder iron and optionally aluminium (A1).

5. Turbine blade (120, 130) of a turbine according to Claim 1, the bonding coat (3) of which consists of chromium (Cr), nickel (Ni), the remainder iron (Fe), optionally aluminium (A1).

6. Turbine blade (120, 130) of a turbine according to one of Claims 1 to 5, **characterized in that** the bonding coat (3) contains 25 wt.% Cr and 20 wt.% Ni.

7. Turbine blade (120, 130) of a turbine according to one of Claims 1 to 5, **characterized in that** the bonding coat (3) contains 30 wt.% Cr and 30 wt.% Ni.

8. Turbine blade (120, 130) of a turbine according to one of Claims 1 to 7 **characterized in that** the bonding coat (3) is designed as a blocking coat which minimizes the inter-diffusion between the component (1) and the bonding coat (3).

9. Turbine blade (120, 130) of a turbine according to one of Claims 1 to 7, **characterized in that** the bonding coat (3) is designed in multiple layers.

10. Turbine blade (120, 130) of a turbine according to Claim 9, **characterized in that** the first layer (5) of the bonding coat (3) applied on the component acts as a blocking coat for at least one further layer (6) formed on the first layer (5), and **in that** it minimizes the inter-diffusion between the component (1) and the further layer (6).

11. Turbine blade (120, 130) of a turbine according to one of Claims 1 to 10, **characterized in that** the thermal barrier coat (4) contains a ceramic.

12. Turbine blade (120, 130) of a turbine according to one of Claims 1 to 10, the thermal barrier coat (4) consists of a ceramic.

13. Turbine blade (120, 130) of a turbine according to Claim 11 or 12, **characterized in that** the component consists of a substrate (2), a bonding coat (3) and a thermal barrier coat.

14. Turbine blade (120, 130) of a turbine according to Claim 11, 12 or 13, **characterized in that** the ceramic is based on zirconium oxide.

## Revendications

1. Aube ( 120,130 ) d'une turbine ayant un système de revêtement,
qui a au moins une couche ( 3 ) d'accrochage déposée directement sur l'élément ( 1 ) et notamment une couche ( 4 ) calorifuge formée sur la couche ( 3 ) d'accrochage,
**caractérisée en ce que**
la couche ( 3 ) d'accrochage est constituée
de 22 à 36 % en poids de Cr,
de 15 à 30 % en poids de Ni,
de Fe comme base
au maximum de 55 ppm d'Al
facultativement
de 1 à 3 % en poids de Si.

2. Aube ( 120, 130 ) d'une turbine suivant la revendication 1 dont la couche ( 3 ) d'accrochage est en chrome ( Cr ), en nickel ( Ni ), en fer ( Fe ) et facultativement en aluminium ( Al ).

3. Aube ( 120, 130 ) d'une turbine suivant la revendication 1 dont la couche ( 3 ) d'accrochage est en chrome ( Cr ), en nickel ( Ni ), en silicium ( Si ), en fer ( Fe ) et facultativement en aluminium ( Al ).

4. Aube ( 120, 130 ) d'une turbine suivant la revendication 1, dont la couche ( 3 ) d'accrochage est en chrome ( Cr ), en nickel ( Ni ), en silicium ( Si ), le reste étant du fer et facultativement : de l'aluminium ( Al ).

5. Aube ( 120, 130 ) d'une turbine suivant la revendication 1, dont la couche ( 3 ) d'accrochage est en chrome ( Cr ), en nickel ( Ni ), le reste étant du fer ( Fe ), facultativement : de l'aluminium ( Al ).

6. Aube ( 120, 130 ) d'une turbine suivant l'une des revendications 1 à 5, **caractérisée en ce que** la couche ( 3 ) d'accrochage contient 25 % en poids de Cr et 20 % en poids de Ni.

7. Aube ( 120, 130 ) d'une turbine suivant l'une des revendications 1 à 5, **caractérisée en ce que** la couche ( 3 ) d'accrochage contient 30 % en poids de Cr et 30 % en poids de Ni.

8. Aube ( 120, 130 ) d'une turbine suivant l'une des revendications 1 à 7, **caractérisée en ce que** la couche ( 3 ) d'accrochage est constituée en couche d'arrêt
qui minimise l'interdiffusion entre l'élément ( 1 ) et la couche ( 3 ) d'accrochage.

9. Aube ( 120, 130 ) d'une turbine suivant l'une des revendications 1 à 7, **caractérisée en ce que** la couche ( 3 ) d'accrochage est constituée en plusieurs strates.

10. Aube ( 120, 130 ) d'une turbine suivant la revendication 9, **caractérisée en ce que**
la première strate ( 5 ) de la couche ( 3 ) d'accrochage, qui est déposée sur l'élément, sert de couche d'arrêt pour au moins une autre strate ( 6 ) formée sur la première strate ( 5 )
en minimisant l'interdiffusion entre l'élément ( 1 ) et l'autre strate ( 6 ).

11. Aube ( 120, 130 ) d'une turbine suivant l'une des revendications 1 à 10, **caractérisée en ce que** la couche ( 4 ) calorifuge contient une céramique.

12. Aube ( 120, 130 ) d'une turbine suivant l'une des revendications 1 à 10, **caractérisée en ce que** la couche ( 4 ) calorifuge est constituée d'une céramique.

13. Aube ( 120, 130 ) d'une turbine suivant l'une des revendications 11 ou 12, **caractérisée en ce que** l'élément est constitué d'un substrat ( 2 ), d'une couche ( 3 ) d'accrochage et d'une couche calorifuge.

14. Aube ( 120, 130 ) d'une turbine suivant l'une des revendications 11, 12 ou 13, **caractérisée en ce que**,
la céramique est à base d'oxyde de zirconium.
